# DEMANDE DE BREVET EUROPEEN

(11) **EP 0 528 732 A1**
(43) Date de publication de la demande: **24.02.1993**
(21) Numéro de dépôt: 92402303.9
(22) Date de dépôt: 19.08.1992
(51) Int. Cl.: H04N 7/14, H04Q 11/04

(54) **Procédé et installation de visiophonie**

(30) Priorité: 21.08.1991 FR 9110493
(71) Demandeur: MATRA COMMUNICATION, F-29101 Quimper (FR)
(72) Inventeur: Hodbert, Francis, F-91380 Chilly Mazarin (FR)
(74) Mandataire: Fort, Jacques

(57) **Abrégé**

Pour établir une communication visiophonique depuis un terminal visiophonique appelant vers un terminal visiophonique appelé et filtré par un poste téléphonique, une fois une communication téléphonique établie entre les terminaux, sur un canal CCBNT, on envoie, à partir du terminal appelé, un message de service inclus dans un message de libération de la ligne CCBNT. Ce message contient un numéro secret d'appel direct (non filtré) du visiophone appelé. On rétablit directement, à partir du terminal appelant, une liaison sur deux canaux de type B en utilisant le numéro secret d'appel non filtré.

## Description

L'invention concerne les procédés d'établissement d'une communication en visiophonie entre un terminal appelant et un terminal appelé par l'intermédiaire des réseaux publics ou privés ainsi que les installations permettant de mettre en oeuvre un tel procédé et les terminaux visiophoniques qu'elles incorporent.

Elle trouve une application particulièrement importante dans les installations téléphoniques ayant des visiophones filtrés par un poste téléphonique de filtrage, l'appel du visiophone à un numéro disponible pour les tiers, qu'on qualifiera par la suite de "public", provoquant l'orientation de l'appel entrant vers le poste téléphonique de filtrage.

On verra qu'une telle architecture d'installation, où le poste de filtrage est un téléphone et non un visiophone, interdit l'établissement de la communication sur un appel entrant depuis le réseau en dehors des périodes où le filtrage est éliminé.

On rappelera tout d'abord la façon dont s'établit normalement un appel d'un visiophone terminal visiophonique, ou appelant à un visiophone appelé. L'abonné appelant appuie sur la touche "visiophonie" de son terminal, forme le numéro de son correspondant et commande l'envoi du message d'appel. Le visiophone appelant tente alors d'établir une liaison par un premier canal CCBT (Communication de Circuit B transparent). Si la communication est acceptée par le visiophone de destination, un deuxième CCBT est établi. La communication visiophonique peut alors avoir lieu, par exemple avec utilisation des protocoles H 221. Si le premier canal B transparent ne peut être établi, parce que le poste destinataire n'est pas un terminal visiophonique mais un poste téléphonique ordinaire, ou si le second canal CCBT ne peut être établi, le terminal visiophonique de départ établit un canal non transparent CCBNT pour se replier en téléphonie traditionnelle, après avoir libéré le premier CCBT s'il avait déjà été établi.

Le terminal visiophonique appelé est filtré par un poste téléphonique, on voit que le terminal visiophonique appelant ne pourra établir une communication de type visiophonique et se repliera en mode téléphone.

La présente invention vise en particulier à fournir un procédé d'établissement de communication visiophonique vers un poste filtré susceptible d'être mis en oeuvre en n'exigeant que des modifications très réduites des terminaux visiophoniques actuels. Dans ce but, l'invention propose notamment un procédé d'établissement d'une communication visiophonique depuis un terminal visiophonique appelant vers un terminal visiophonique appelé et filtré par un poste téléphonique, caractérisé en ce que, une fois une communication téléphonique établie entre les terminaux, sur un canal CCBNT, on envoie, à partir du terminal appelé, un message de service inclus dans un message de libération de la ligne CCBNT et contenant un numéro secret d'appel direct (non filtré) du visiophone appelé et en ce qu'on rétablit directement, à partir du terminal appelant, une liaison sur deux canaux de type B en utilisant le numéro secret d'appel non filtré.

Le numéro d'appel secret reste inconnu de l'abonné demandeur ; il est simplement stocké dans une mémoire tampon pendant le temps nécessaire pour le rétablissement d'une liaison visiophonique. La possibilité de disposer pour un même terminal de deux numéros d'appel, dont un seul est publié n'implique pas de complication dans les réseaux conformes aux dernières recommandations du CCITT, qui autorisent des numéros d'appel multiples sous le terme MSN (Multiple subscriber number).

L'invention propose également une installation téléphonique permettant de mettre en oeuvre le procédé ci-dessus , comportant un terminal visiophonique affecté d'un numéro public d'appel par le réseau et un poste téléphonique de filtrage du terminal visiophonique, ainsi que des moyens pour orienter vers le poste de filtrage tout appel entrant adressé au numéro public d'appel,
caractérisée en ce qu'elle comprend des moyens d'accès permettant d'appeler le terminal visiophonique sans filtrage, à un numéro d'appel secret, et des moyens pour émettre, en réponse à une commande manuelle d'acceptation de communication visiophonique, un message fournissant l'adresse secrète au terminal visiophonique appelant.

Les terminaux visiophoniques présentant ces fonctionnalités permettent non seulement de mettre en oeuvre le procédé ci-dessus défini, mais aussi de façon plus générale de passer, à la demande de l'un ou l'autre de deux terminaux visiophoniques déjà en liaison téléphonique, d'une conversation en mode téléphonique (sur un canal non transparent de type CCNBT) à une liaison visiophonique par l'intermédiaire de deux canaux CCBT.

Le procédé selon l'invention comporte alors les étapes suivantes, une fois une liaison de type téléphonie sur un canal CCBNT établie entre deux terminaux visiophoniques : on envoie, à partir d'un premier des terminaux, un message de libération du canal CCBNT contenant un message de service contenant un numéro secret d'appel direct du premier terminal et une instruction de commande d'appel permettant d'établir, en retour, une communication visiophonique sur un premier, puis un second canal CCBT par appel automatique à partir du second terminal visiophonique.

Les seules modifications à apporter à un terminal visiophonique de type actuel sont constituées par :
- l'adjonction, pour lancer la procédure d'établissement de la liaison visiophonique, de moyens pour stocker un message de service supplémentaire et l'insérer dans le message de libération de ligne ;
- l'adjonction, pour provoquer l'établissement de la liaison, de moyens pour identifier une demande d'établissement de communication et mémoriser temporairement le numéro d'appel secret qui sera utilisé dans la procédure en substitution du numéro d'appel public.

L'invention sera mieux comprise à la lecture de la description qui suit d'un mode particulier de réalisation, donné à titre d'exemple non limitatif. La description se réfère aux dessins qui l'accompagnent, dans lesquels :
- la figure 1 montre schématiquement un schéma d'acheminement d'appel depuis un terminal visiophonique appelant V1 vers un terminal visiophonique appelé V2, par l'intermédiaire d'un autocommutateur privé PBX ;
- la figure 2 montre la séquence des opérations qui interviennent en cas d'appel du visiophone V1 vers un visiophone V2 filtré, provoquant un repli en mode téléphonique ;
- la figure 3 montre la séquence des opérations de transfert de l'appel vers le visiophone appelé V2 ;
- la figure 4 montre les opérations au cours de la séquence de libération de la communication téléphonique et d'établissement de communication visiophonique.

L'invention sera exposée dans son application à l'établissement d'une communication à partir d'un terminal visiophonique appelant V1 vers un terminal visiophonique V2 filtré par un poste téléphonique de filtrage, par l'intermédiaire d'un réseau numérique à intégration de service de type NUMERIS et d'un autocommutateur privé PBX.

On supposera que le visiophone appelant a un numéro d'appel ou adresse #4. La mise en oeuvre de l'invention exige que le terminal visiophonique appelé V2 soit accessible à deux adresses. L'une des adresses ou numéro d'appel #1 provoque le renvoi vers le poste téléphonique de filtrage de numéro d'appel #3. Un second numéro d'appel, autorisé par les fonctionnalités offertes par les autocommutateurs récents et la plupart des réseaux RNIS, permet d'accéder au terminal visiophonique sans filtrage. Ce second numéro d'appel #2 est secret, c'est-à-dire reste inconnu de tout abonné demandeur.

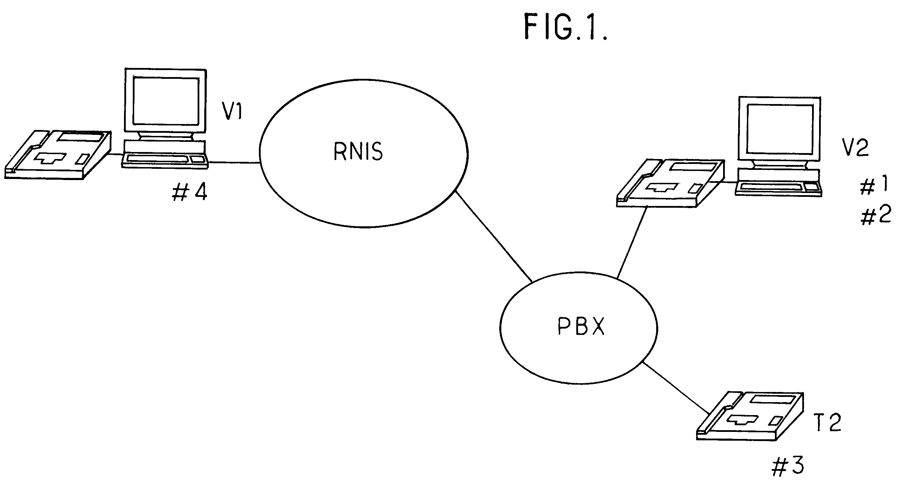

Avant d'exposer l'invention proprement dite, on rappellera la succession des opérations qui interviennent dans une installation existante d'appel d'un terminal visiophonique filtré, à une adresse "publique" #1 renvoyée vers un poste de filtrage #3. La succession des opérations est illustrée en figure 1.

L'abonné au numéro d'appel #4 appuie sur la touche "visiophonie" de son terminal, numérote l'adresse #1 du correspondant demandé et appuie sur la touche envoi.

Il y a alors tentative de connexion en mode visiophonie avec le terminal V2. Le terminal V1 envoie par le réseau une demande d'établissement de liaison avec V2, à l'adresse #1, sur un canal transparent CCBT de type NUMERIS. L'appel est présenté par l'autocommutateur de réception non pas au terminal V2, mais au poste T2, en mode CCBT, en même temps qu'il y a retour de sonnerie. Faute d'une réponse par le téléphone T2, il y a, après une temporisation et une nouvelle présentation d'appel, libération du CCBT avec indication de la cause (non réponse du terminal appelé).

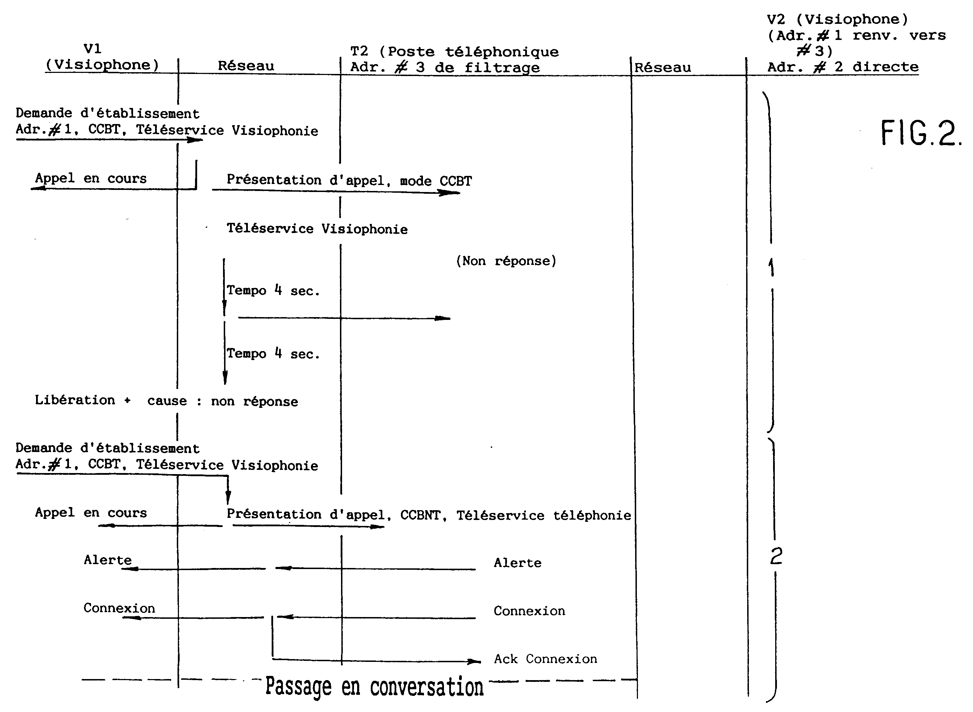

Après cette séquence 1 (figure 2), terminée par la libération du canal CCBT, le visiophone V1 lance automatiquement une connexion en mode téléphonie (séquence 2 sur la figure 2). Cette séquence comporte une demande d'établissement de liaison avec le terminal d'adresse #1, sur un canal non transparent CCBNT, en téléphonie. La présentation de l'appel au poste téléphonique T2 de filtrage, à l'adresse #3 s'effectue suivant le processus habituel et s'achève par l'acquittement de connexion (ACK connexion). Il y a alors passage en conversation entre le terminal visiophonique V1 et le poste téléphonique de filtrage T2.

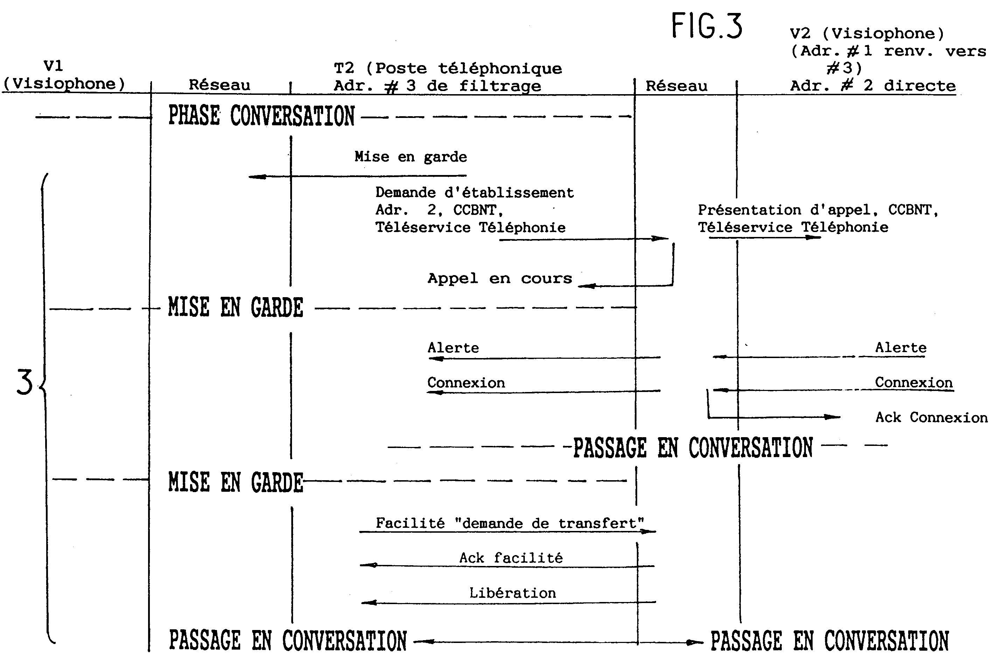

Classiquement, le poste T2 peut transférer l'appel téléphonique vers le visiophone V2, en utilisant l'adresse #2 qui n'est pas renvoyée. La séquence jusqu'au passage en conversation entre V1 et V2 est donnée sur la figure 3. Elle est également classique. Il y a successivement conversation entre T2 et V2, en mode téléphonique, puis transfert d'appel vers V2. Arrivé à ce stade, le procédé suivant l'invention permet à l'un ou l'autre des terminaux visiophoniques V1 et V2, dans la mesure où ils sont l'un et l'autre complètement équipés, de substituer une communication visiophonique sur deux canaux de type B à la communication téléphonique déja établie.

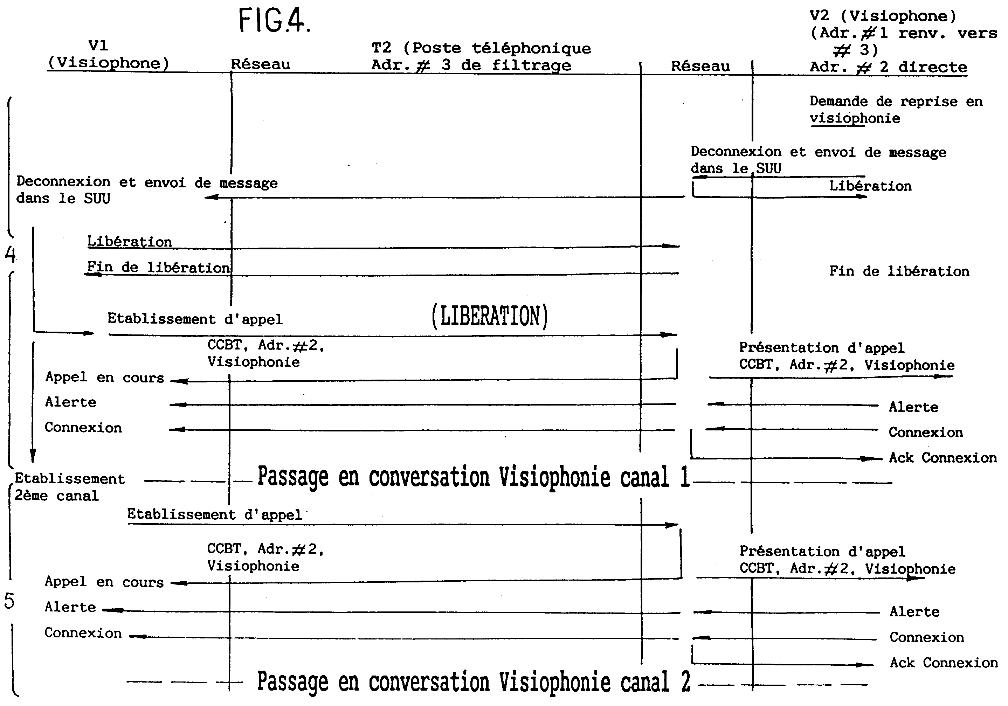

La figure 4 montre comment s'effectue le retour en mode visiophonie sur initiative de l'utilisateur du terminal V2. Les opérations impliquent :
- la rupture de la communication téléphonique établie,
- l'envoi d'un message de service de V2 vers V1, donnant au demandeur l'adresse "secrète" non filtrée du terminal V2,
- l'établissement automatique de la communication visiophonique sur deux canaux B.

Pour cela, le terminal V2 doit comporter une mémoire de stockage d'un message de service qui est incorporé au message de libération de la communication téléphonique.

La séquence d'établissement de la communication visiophonique est provoquée par une demande de reprise en visiophonie, matérialisée par exemple par l'appui sur une touche "visiophonie" de V2. Cette demande provoque la déconnexion et l'envoi de message provoquant la libération.

Dans la mesure où le visiophone appelant V1 est équipé de moyens matériels et de logiciels lui permettant de répondre au message de service, il formule une demande d'établissement d'appel en visiophonie, mais cette fois à l'adresse #2 qui vient de lui être donnée. L'établissement de la liaison peut alors s'effectuer de la façon classique entre visiophones non filtrés, comme indiqué sur la figure 4. La phase finale de la séquence 4 est constituée par l'établissement de la liaison visiophonique sur un premier canal CCBT. Une fois la première communication établie, il y a établissement d'un second canal CCBT (séquence 5).

Il faut noter qu'une fois la communication établie, l'initiative du passage en mode visiophonique peut provenir aussi bien du terminal appelant à l'origine #4 que du terminal appelé à l'origine. On peut également relever que l'établissement de la communication visiophonique peut s'effectuer à partir non pas d'un visiophone, mais entre deux postes de filtrage, avec ensuite établissement d'une communication téléphonique entre les deux visiophones, puis passage en mode visiophonique.

## Revendications

1. Procédé d'établissement d'une communication visiophonique depuis un terminal visiophonique appelant vers un terminal visiophonique appelé et filtré par un poste téléphonique, caractérisé en ce que, une fois une communication téléphonique établie entre les terminaux, sur un canal CCBNT, on envoie, à partir du terminal appelé, un message de service inclus dans un message de libération de la ligne CCBNT et contenant un numéro secret d'appel direct (non filtré) du visiophone appelé et en ce qu'on rétablit directement, à partir du terminal appelant, une liaison sur deux canaux de type B en utilisant le numéro secret d'appel non filtré.

2. Procédé d'établissement d'une liaison visiophonique entre deux terminaux visiophoniques en liaison téléphonique, caractérisé en ce que : on envoie, à partir d'un des terminaux, un message de libération du canal CCBNT contenant un message de service contenant un numéro d'appel direct du terminal et on établit en retour une communication visiophonique sur un premier, puis un second canal CCBT par appel automatique à partir du second terminal visiophonique.

3. Installation téléphonique de mise en oeuvre du procédé selon la revendication 1 ou 2, comportant un terminal visiophonique affecté d'un numéro public d'appel par le réseau et un poste téléphonique de filtrage du terminal visiophonique, ainsi que des moyens pour orienter vers le poste de filtrage tout appel entrant adressé au numéro public d'appel, caractérisée en ce qu'elle comprend des moyens d'accès permettant d'appeler le terminal visiophonique sans filtrage, à un numéro d'appel secret, et des moyens pour émettre, en réponse à une commande manuelle d'établissement de communication visiophonique sur le terminal, un message de service fournissant le numéro d'appel secret au terminal appelant.

4. Installation suivant la revendicaction 3, caractérisée en ce que les dits moyens comprennent une mémoire de stockage de message de service et des moyens pour l'insérer dans un message de libération de ligne.

5. Installation suivant la revendication 2 ou 3, caractérisée en ce que le terminal comprend également des moyens pour identifier un message de libération incorporant un message de service demandant l'établissement d'une communication à un numéro d'appel secret, mémoriser temporairement le numéro d'appel secret et provoquer un appel visiophonique à ce numéro.

6. Terminal visiophonique comprenant, en plus des composants nécessaires à la communication visiophonique en réponse à une commande locale :
des moyens pour mémoriser un message de service et des moyens pour l'insérer dans le message de libération de ligne en réponse à une commande locale alors qu'une communication téléphonique est établie, ledit message de service comportant une demande d'étalissement de communication visiophonique et un numéro d'appel secret ; et
des moyens pour identifier un message de libération incorporant un message de service demandant l'établissement d'une communication à numéro d'appel secret, mémoriser temporairement le numéro d'appel secret et provoquer un appel visiophonique à ce numéro.
